# FASCICULE DE BREVET EUROPEEN

(11) **EP 1 583 287 B1**
(45) Date de publication et mention de la délivrance du brevet: **03.05.2017**
(21) Numéro de dépôt: 05290635.1
(22) Date de dépôt: 23.03.2005
(51) Int. Cl.: H04L 12/751, H04L 12/707, H04L 12/703

(54) **Procédé d'échange d'informations entre deux réseaux fonctionnant sous des protocoles de routage différents**
Verfahren für den Informationsaustausch zwischen zwei verschiedene Routing-Protokolle benutzenden Netzen
Method for information exchange between two networks running different routing protocols

(30) Priorité: 30.03.2004 FR 0403280
(43) Date de publication de la demande: 05.10.2005
(73) Titulaire: Safran Electronics & Defense, 92100 Boulogne-Billancourt (FR)
(72) Inventeur: Jacquet, Adeline, 75014 Paris (FR); Brive, Robert, 95300 Herouville (FR); Declety, Benjamin, 92100 Boulogne Billancourt (FR)
(74) Mandataire: Lavialle, Bruno François Stéphane

(56) Documents cités:
- JEFF DOYLE: "CCIE PROFESSIONAL DEVELOPMENTROUTING TCPIP, VOLUME I" CISCO PRESS, 1998, pages I,II,546,547,550,551,696,697,721,731,733,7 34,735,7-36,772,773, XP002303836 INDIANAPOLIS
- MOY ASCEND COMMUNICATIONS J ET AL: "OSPF Version 2" IETF STANDARD, INTERNET ENGINEERING TASK FORCE, IETF, CH, avril 1998 (1998-04), pages 1-245, XP015008112 ISSN: 0000-0003
- KIM K-I ET AL: "SCALABLE IPV6 MULTI-HOMING SCHEME BASED ON END-TO-END ARGUMENT" IEEE COMMUNICATIONS LETTERS, IEEE SERVICE CENTER, PISCATAWAY,US, US, vol. 7, no. 7, juillet 2003 (2003-07), pages 340-342, XP001175980 ISSN: 1089-7798
- T. BATES: "RFC 2260 - Scalable Support for Multi-homed Multi-provider Connectivity" IETF RFC, [Online] 31 janvier 1998 (1998-01-31), pages 1-12, XP002303904 Extrait de l'Internet: URL:http://www.faqs.org/ftp/rfc/pdf/rfc226 0.txt.pdf> [extrait le 2004-11-03]

## Description

La présente invention concerne un procédé d'échange d'informations entre deux réseaux fonctionnant sous des protocoles de routage différents.

### ARRIERE PLAN DE L'INVENTION

Il est connu des réseaux d'un premier type dans lequel le routage des informations entre les différents éléments du réseau utilise des tables de routage statiques. Une table de routage répertorie pour chaque élément de réseau les parties de réseaux directement ou indirectement reliées à l'élément de réseau concerné et les interfaces de cet élément de réseau permettant l'accès à ces différentes parties de réseaux. Une table de routage est dite statique lorsque toute modification du réseau suppose la modification correspondante par un opérateur des tables de routage des éléments de réseau.

Il est connu des réseaux d'un deuxième type dans lesquels le routage des informations entre les différents éléments du réseau utilise des tables de routage dynamiques. Le protocole de routage hiérarchisé à état de liens OSPF ("Open Shortest Path First") qui fait notamment l'objet du rapport technique RFC 2328 de la Communauté Internet (IETF ou "Internet Engineering Task Force") fait partie de ces protocoles de routage. Ce type de protocole de routage prévoit une phase d'échange de messages d'identification et de messages de mise à jour des tables de routage. Les messages d'identification comportent un champ d'identification de voisinage normalement dédié à recevoir des identifiants d'éléments de réseau voisins directement reliés à l'élément de réseau émetteur du message d'identification et qui signale aux éléments de réseau voisins que l'élément de réseau émetteur est actif. Les messages de mise à jour contiennent notamment, de manière habituelle, les identifiants d'éléments de réseau auxquels l'élément de réseau émetteur de messages sait être directement ou indirectement relié.

Il est prévu d'installer dans certains avions un réseau embarqué qui comporte un réseau avionique, du premier type, sécurisé et utilisé pour le fonctionnement de l'avion, et un réseau public, du deuxième type, plus faiblement sécurisé et utilisé par l'équipage pour obtenir des informations sur le vol ou les passagers, sur les aéroports empruntés... et pour permettre aux passagers d'accéder à des moyens de divertissement. Le réseau public est également utilisé par les équipes de maintenance au sol pour obtenir les paramètres du vol après l'atterrissage de l'avion. Le réseau avionique est relié au réseau public par au moins deux premiers éléments de routage sélectivement associés au réseau avionique et au moins un deuxième élément de routage associé au réseau public et relié aux premiers éléments de routage.

Idéalement, pour assurer une parfaite inter-opérabilité des deux réseaux, il serait nécessaire que le premier élément de routage puisse mettre en oeuvre le protocole de routage à base de tables dynamiques et échange avec le deuxième élément de routage des messages d'identification et des messages de mise à jour. Ces échanges feraient toutefois supporter une charge de travail relativement importante aux premiers dispositifs de routage alors que ceux-ci ne disposent généralement que de ressources informatiques relativement limitées. Un exemple d'inter-opérabilité entre deux réseaux est décrit dans le document XP002303836.

En outre, pour assurer la fiabilité du réseau, il est prévu que les deux premiers éléments de routage sont reliés au premier réseau de façon alternative. Il est donc impératif que le deuxième élément de routage puisse identifier le premier élément de routage actif afin de réaliser un routage efficace.

### OBJET DE L'INVENTION

Un but de l'invention est de proposer un procédé d'échange d'informations -entre un réseau utilisant un protocole de routage à base de tables de routage statiques et un réseau utilisant un protocole de routage à base de tables de routage dynamiques- qui ne nécessite qu'un transfert limité d'informations pour la mise à jour des tables de routage dynamiques tout en permettant un routage fiable des informations.

### BREVE DESCRIPTION DE L'INVENTION

A cet effet, on prévoit, selon l'invention, un procédé d'échange d'informations entre un premier réseau et un deuxième réseau qui comportent chacun des éléments de réseau et qui sont reliés l'un à l'autre par au moins deux premiers éléments de routage sélectivement associés au premier réseau et au moins un deuxième élément de routage associé au deuxième réseau et relié aux premiers éléments de routage. Le premier réseau met en oeuvre un protocole de routage utilisant des tables de routage statiques et le deuxième réseau met en oeuvre un protocole de routage utilisant des tables de routage dynamiques. Le procédé comporte les étapes de :
- émettre, depuis chaque premier élément de routage vers le deuxième élément de routage, des messages d'identification ayant un champ d'identification de voisinage comportant des identifiants d'éléments de réseau auxquels le premier élément de routage sait être directement ou indirectement relié,
- traiter dans le premier élément de routage les messages d'identification provenant du deuxième élément de routage seulement comme un signalement de l'activité du deuxième élément de routage,
- mettre à jour dans le deuxième élément de routage la table de routage à partir des messages d'identification provenant du premier élément de routage.

Les identifiants d'éléments de réseau auxquels le premier élément de routage sait être relié sont ici les adresses réseau de ces éléments de réseau, c'est-à-dire les adresses des parties de réseau (ou des réseaux) auxquelles ces éléments de réseau appartiennent.

Ainsi, les messages d'identification émis par le premier élément de routage comportent à la fois les informations des messages d'identification classiques et des informations permettant la mise à jour de la table de routage du deuxième élément de routage. Du fait de l'incorporation dans les messages d'identification de ces informations qui devraient figurer normalement dans les messages de mise à jour, les messages de mise à jour ne sont alors plus nécessaires. La charge de travail du premier élément de routage est alors relativement faible tandis que le volume d'informations transitant entre les premiers éléments de routage et le deuxième élément de routage est réduit. Le champ d'identification de voisinage des messages d'identification émis par les premiers éléments de routage permet en outre au deuxième élément de routage de déterminer lequel des deux premiers éléments de routage est effectivement relié au premier réseau.

Avantageusement, le deuxième élément de routage est configuré pour ne pas émettre de message de mise à jour vers le premier élément de routage.

Les messages de mise à jour n'étant ni émis ni utilisés par le premier élément de routage qui dispose d'une table de routage statique et, éventuellement d'une route par défaut pour les informations à destination du deuxième réseau, il n'est pas nécessaire que le deuxième élément de routage envoie des messages de mise à jour vers le premier élément de routage, ce qui permet de limiter encore la charge de travail du premier élément de routage et le volume des informations échangées sur la liaison entre le premier élément de routage et le deuxième élément de routage.

D'autres caractéristiques et avantages de l'invention ressortiront à la lecture de la description qui suit d'un mode de réalisation particulier non limitatif de l'invention.

### BREVE DESCRIPTION DES DESSINS

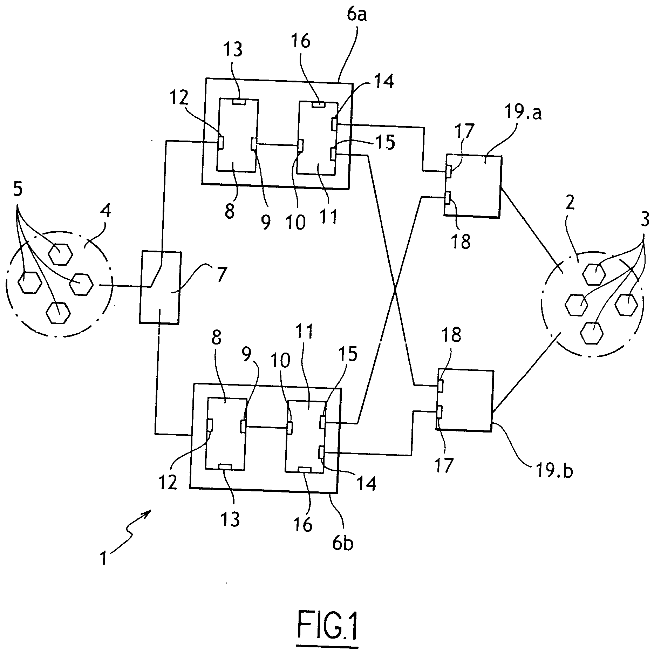

Il sera fait référence à la figure unique annexée qui représente schématiquement un réseau mettant en oeuvre le procédé conforme à l'invention.

### DESCRIPTION DETAILLEE DE L'INVENTION

En référence à la figure, le procédé de l'invention est ici décrit en relation avec un réseau généralement désigné en 1 embarqué par exemple à bord d'un avion.

Le réseau 1 comprend un réseau 2 comportant des éléments de réseau 3 tels que des serveurs ou autres dispositifs informatiques et un réseau 4 comportant des éléments de réseau 5 tels que des serveurs ou autres dispositifs informatiques. Le réseau 2 est ici un réseau public utilisé par l'équipage pour obtenir des informations sur le vol, les passagers, les aéroports empruntés... et pour permettre aux passagers d'accéder à des moyens de divertissement. Le réseau 4 est ici utilisé pour le fonctionnement de l'avion lui-même. Le réseau 4 est un réseau fortement sécurisé tandis que le réseau 2 est un réseau faiblement sécurisé.

Deux éléments de protection et de routage 6a, 6b sont reliés au réseau 1 par l'intermédiaire d'un dispositif de sélection 7.

Chaque dispositif de protection et de routage 6 est connu en lui-même et comprend un routeur 8 ayant une interface interne 9 reliée à une interface interne 10 d'un élément de filtrage 11 de type DMZ (pour "DeMilitarized Zone"). Le routeur 8 a également une interface externe 12 reliée au dispositif de sélection 7 et une interface interne 13 utilisable pour des opérations de maintenance. L'élément de filtrage 11 possède des interfaces externes 14, 15 et une interface interne 16 utilisable pour des opérations de maintenance.

Les interfaces externes 14 des éléments de filtrage 11 des dispositifs de protection et routage 6a, 6b sont reliés aux interfaces 17 de dispositifs de routage 19a, 19b respectivement. Les interfaces externes 15 des éléments de filtrage 11 des dispositifs de protection et routage 6a, 6b sont reliés aux interfaces 18 des dispositifs de routage 19a, 19b respectivement. Les liaisons entre les dispositifs de protection et routage 6a, 6b et les dispositifs de routage 19a, 19b respectivement sont privilégiées dans les tables de routage.

Les dispositifs de routage 19a, 19b sont reliés au réseau 2.

Le dispositif de sélection 7 comprend un moyen de commutation de la liaison entre d'une part le réseau 4 et d'autre part l'un ou l'autre des dispositifs de protection et de routage 6a, 6b (le dispositif de protection et de routage 6a est raccordé au réseau 4 sur la figure).

Le réseau 4 fonctionne selon un protocole de routage à base de tables de routage statiques. Les dispositifs de protection et de routage 6a, 6b de même que les éléments de réseau 5 assurant une fonction de routage comportent ainsi une mémoire contenant la table de routage qui leur est associée. Chaque table de routage comporte ici des routes définies pour atteindre des éléments du réseau 4 et une route par défaut pour atteindre les éléments du réseau 2.

Le réseau 2 fonctionne selon un protocole de routage à base de tables de routage dites dynamiques. Chaque table de routage contient des routes qui associent une interface de sortie à un réseau à atteindre (ou une partie de réseau ou un sous-réseau) sous la forme d'une adresse de réseau associée à un masque de réseau. Ce protocole de routage est ici le protocole OSPF qui prévoit l'échange, entre les éléments du réseau 2 assurant une fonction de routage (y compris les dispositifs de routage 19a, 19b) :
- de messages d'identification qui comportent un champ d'identification de voisinage normalement dédié à recevoir des identifiants (en l'occurrence les adresses IP) d'éléments de réseau voisins directement reliés à l'élément de réseau émetteur du message d'identification et qui signale à ces éléments que l'élément de réseau émetteur est en activité (ces messages sont connus sous le nom de paquets HELLO dans le protocole OSPF),
- de messages de mise à jour des tables de routage, ces messages contenant normalement les identifiants d'éléments de réseau auxquels l'élément de réseau émetteur du message sait être directement ou indirectement relié (ces messages sont connus sous le nom de messages d'état de lien LSA, LSU, LSR dans le protocole OSPF). Ces identifiants sont les adresses de réseau desdits éléments de réseau, ces adresses de réseau étant associées à des plages de réseau.

Les dispositifs de protection et de routage 6 sont configurés pour :
- émettre vers les dispositifs de routage 19 des messages d'identification ayant un champ d'identification de voisinage contenant des identifiants des éléments de réseau auxquels le dispositif de protection et de routage sait être relié directement ou indirectement, c'est-à-dire les adresses de réseau des interfaces 9 (qui est la même que celle de l'interface 10 ; on notera que deux interfaces reliées ensemble ayant la même adresse réseau, cette adresse n'est mentionnée qu'une fois), 12 (si le dispositif de protection et de routage 6 en question est relié au dispositif de sélection 7), 13, 14 ou 15 (selon que le dispositif de protection et de routage 6 en question est relié au dispositif de routage 19a ou 19b ; les adresses réseau des interfaces 14 et 15 étant les mêmes que celles des interfaces 17, 18 respectivement), 16 et l'adresse de réseau du réseau 4,
- traiter les messages d'identification reçus des dispositifs de routage 19 uniquement comme signalant l'activité des dispositifs de routage 19.

Ainsi, le champ d'identification de voisinage émis par le dispositif de protection et de routage 6a contient :
- les adresses des réseaux auxquels appartiennent les interfaces 9, 12 (car le dispositif de protection et de routage 6a est relié au dispositif de sélection 7), 13, 14 (le dispositif de protection et de routage 6a étant relié prioritairement à l'interface 17 du dispositif de routage 19a ; si le dispositif de protection et de routage 6a ne recevait de messages d'identification que du dispositif de routage 19b, l'adresse de réseau de l'interface 15 de ce dispositif serait indiqué), et 16,
- l'adresse de réseau du réseau 4.

Le champ d'identification de voisinage émis par le dispositif de protection et de routage 6b contient les adresses de réseau des interfaces 9, 13, 14 (le dispositif de protection et de routage 6b étant relié prioritairement à l'interface 17 du dispositif de routage 19b), 16.

Le dispositif de protection et de routage 6b n'étant pas relié par le dispositif de sélection 7 au réseau 4, l'interface 12 n'est pas active de sorte que l'adresse de réseau du réseau 4 et l'adresse de réseau de l'interface 12 ne figurent pas dans le champ d'identification de voisinage. Ainsi, le dispositif de routage 19a est informé du dispositif de protection et de routage 6 qui est raccordé au réseau 4.

Les dispositifs de routage 19 sont configurés pour :
- mettre à jour leurs tables de routage à partir des messages d'identification reçus des dispositifs de protection et de routage 6,
- ne pas émettre de messages de mise à jour des tables de routage vers les dispositifs de protection et de routage 6,
- échanger de façon classique des messages d'identification et des messages de mise à jour avec les autres éléments de réseau 3 assurant une fonction de routage.

Chaque dispositif de routage 19 doit comporter en mémoire une table statique de correspondance entre les adresses de réseau figurant dans le champ d'identification de voisinage des messages d'identification des dispositifs de protection et de routage 6 et la plage réseau de cette adresse, cette dernière information ne pouvant transiter dans le champ d'identification de voisinage du message d'identification. Pour le bon fonctionnement du protocole OSPF, il est également nécessaire que pour chaque route, un poids soit mémorisé dans cette table statique de correspondance. Une seule route étant possible pour accéder au réseau 4, le poids est déterminé arbitrairement et vaut ici 1.

On notera que le réseau 4 est identifié de manière globale dans le champ d'identification de voisinage des messages d'identification émis par les dispositifs de protection et de routage 6. Ceci permet d'éviter que les dispositifs de protection et de routage 6 ne transmettent une indication de la topographie de ce réseau 4 sur le réseau 2.

La composition du réseau 4 est ainsi conservée secrète vis-à-vis du réseau 2. La sécurité du réseau 4 est ainsi améliorée.

Bien entendu, l'invention n'est pas limitée au mode de réalisation décrit et on peut y apporter des variantes de réalisation sans sortir du cadre de l'invention tel que défini par les revendications.

En particulier, la configuration du réseau peut être différente de celle représentée et comporter un nombre différent de dispositifs de protection et de routage 6 et/ou de dispositifs de routage 19.

Le dispositif de sélection peut être un commutateur électrique disposé sur les liaisons entre le réseau 4 et les dispositifs de protection et de routage 6 ou la sélection peut résulter d'une affectation d'adresse à l'un seulement des dispositifs de protection et de routage 6.

Les dispositifs de protection et de routage 6 peuvent être reliés au réseau 4 par un serveur de type Proxy qui outre la vérification du contenu des flux d'informations assure une conversion de protocole lorsque les deux réseaux n'utilisent pas les mêmes protocoles de communication.

## Revendications

1. Procédé d'échange d'informations entre un premier réseau (4) et un deuxième réseau (2) qui comportent chacun des éléments de réseau (5, 3) et qui sont reliés l'un à l'autre par au moins deux premiers éléments de routage (6) sélectivement associés au premier réseau (4) et au moins un deuxième élément de routage (19) associé au deuxième réseau (2) et relié aux premiers éléments de routage, le premier réseau mettant en oeuvre un protocole de routage utilisant des tables de routage statiques, et le deuxième réseau mettant en oeuvre un protocole de routage utilisant des tables de routage dynamiques et comprenant une phase d'échange de messages d'identification qui comportent un champ d'identification de voisinage normalement dédié à recevoir des identifiants d'éléments de réseau voisins directement reliés à l'élément de réseau émetteur du message d'identification et qui signale aux éléments de réseau voisins que l'élément de réseau émetteur est actif, et une phase d'échange de messages de mise à jour des tables de routage, ces messages de mise à jour contenant normalement les identifiants d'éléments de réseau auxquels l'élément de réseau émetteur du message sait être directement ou indirectement relié, **caractérisé en ce que** le procédé comporte les étapes de :
- émettre, depuis chaque premier élément de routage vers le deuxième élément de routage, des messages d'identification ayant un champ d'identification de voisinage comportant des identifiants d'éléments de réseau auxquels le premier élément de routage sait être directement ou indirectement relié,
- traiter dans chaque premier élément de routage les messages d'identification provenant du deuxième élément de routage seulement comme un signalement de l'activité du deuxième élément de routage,
- mettre à jour dans le deuxième élément de routage la table de routage à partir des messages d'identification provenant du premier élément de routage.

2. Procédé selon la revendication 1, **caractérisé en ce que** le deuxième élément de routage (19) est configuré pour ne pas émettre de message de mise jour vers le premier élément de routage (6).

3. Procédé selon la revendication 1, **caractérisé en ce que** le premier réseau (4) est identifié de manière globale dans le champ d'identification de voisinage des messages d'identification émis par le premier élément de routage (6) effectivement associé au premier réseau.

## Patentansprüche

1. Verfahren zum Austausch von Informationen zwischen einem ersten Netzwerk (4) und einem zweiten Netzwerk (2), die jeweils Netzelemente (5, 3) umfassen und die miteinander über mindestens zwei erste Routingelemente (6) verbunden sind, die selektiv mit dem ersten Netzwerk (4) verknüpft sind, sowie über mindestens ein zweites Routingelement (19), das mit dem zweiten Netzwerk (2) verknüpft und mit den ersten Routingelementen verbunden ist, wobei das erste Netzwerk ein Routingprotokoll ausführt, das statische Routingtabellen verwendet, und das zweite Netz ein Routingprotokoll ausführt, das dynamische Routingtabellen verwendet und eine Phase des Austauschens von Identifikationsnachrichten umfasst, die ein Nachbarschaftsidentifikationsfeld umfassen, das normalerweise dazu bestimmt ist, Identifizierungen benachbarter Netzelemente zu empfangen, die direkt mit dem die Identifikationsnachricht aussendenden Netzelement verbunden sind, und das den benachbarten Netzelementen anzeigt, dass das aussendende Netzelement aktiv ist, sowie eine Phase des Austauschens von Nachrichten zur Aktualisierung der Routingtabellen, wobei diese Aktualisierungsnachrichten normalerweise die Identifizierungen von Netzelementen enthalten, mit denen das die Nachricht aussendende Netzelement direkt oder indirekt verbunden werden kann, **dadurch gekennzeichnet, dass** das Verfahren die Schritte umfasst:
- Aussenden von Identifikationsnachrichten von jedem ersten Routingelement in Richtung des zweiten Routingelements, wobei die Identifikationsnachrichten ein Nachbarschaftsidentifikationsfeld haben, das Identifizierungen von Netzelementen umfasst, mit denen das erste Routingelement direkt oder indirekt verbunden werden kann,
- Verarbeiten in jedem ersten Routingelement der aus dem zweiten Routingelement stammenden Identifikationsnachrichten, einzig um anzuzeigen, dass das zweite Routingelement aktiv ist,
- Aktualisieren der Routingtabelle in dem zweiten Routingelement anhand von Identifikationsnachrichten, die aus dem ersten Routingelement stammen.

2. Verfahren nach Anspruch 1, **dadurch gekennzeichnet, dass** das zweite Routingelement (19) so konfiguriert ist, dass es keine Aktualisierungsnachricht in Richtung des ersten Routingelements (6) aussendet.

3. Verfahren nach Anspruch 1, **dadurch gekennzeichnet, dass** das erste Netzwerk (4) auf globale Weise in dem Nachbarschaftsidentifikationsfeld der Identifikationsnachrichten identifiziert wird, die von dem ersten Routingelement (6), das tatsächlich mit dem ersten Netzwerk verknüpft ist, ausgesendet werden.

## Claims

1. Method for information exchange between a first network (4) and a second network (2) which each comprise network elements (5, 3) and which are connected together by at least two first routing elements (6) which are selectively associated with the first network (4) and by at least one second routing element (19) which is associated with the second network (2) and which is connected to the first routing elements, with the first network employing a routing protocol which uses static routing tables and with the second network employing a routing protocol which uses dynamic routing tables and which comprises a phase for the exchange of identification messages, these identification messages comprising a field for identifying neighbourship which is normally devoted to receiving identifiers of neighbour network elements directly connected to the network element emitting the identification message and which indicates to the neighbour network elements that the emitting network element is active, said routing protocol also comprising a phase for exchanging messages for updating the routing tables, these updating messages normally containing identifiers of network elements to which the message-emitting network element can be directly or indirectly connected, **characterised in that** the method comprises the steps of:
- emitting, from each first routing element towards the second routing element, identification messages having a field for identifying neighbourship which comprises identifiers of network elements to which the first routing element can be directly or indirectly connected,
- processing in each first routing element the identification messages coming from the second routing element only as an indication that the second routing element is active,
- updating, in the second routing element, the routing table from the identification messages coming from the first routing element.

2. Method according to claim 1, **characterised in that** the second routing element (19) is configured not to emit updating messages towards the first routing element (6).

3. Method according to claim 1, **characterised in that** the first network (4) is identified as a whole in the field for identifying neighbourship of the identification messages which are emitted by the first routing element (6) actually associated with the first network.
